(19) Europäisches Patentamt
European Patent Office
Office européen des brevets

(11) Veröffentlichungsnummer: **0 213 390**
**B1**

(12) # EUROPÄISCHE PATENTSCHRIFT

(45) Veröffentlichungstag der Patentschrift: **07.11.90**

(21) Anmeldenummer: **86110344.8**

(22) Anmeldetag: **26.07.86**

(51) Int. Cl.[5]: **C 04 B 28/06,** C 04 B 28/04, C 04 B 38/10 // (C04B28/06, 22:00, 22:06, 22:10, 22:14, 24:06),(C04B28/04, 22:00, 22:06, 22:10, 22:14, 24:06)

(54) **Mörtelmischung für schnellerhärtende Zementestriche.**

(30) Priorität: **03.08.85 DE 3527982**

(43) Veröffentlichungstag der Anmeldung:
**11.03.87 Patentblatt 87/11**

(45) Bekanntmachung des Hinweises auf die Patenterteilung:
**07.11.90 Patentblatt 90/45**

(84) Benannte Vertragsstaaten:
**AT BE CH DE FR GB IT LI LU NL SE**

(56) Entgegenhaltungen:
**EP-A-0 151 452**
**DE-A-3 215 777**
**FR-A-1 452 567**
**FR-A-2 289 460**
**US-A-3 997 353**

**Die Akte enthält technische Angaben, die nach dem Eingang der Anmeldung eingereicht wurden und die nicht in dieser Patentschrift enthalten sind.**

(73) Patentinhaber: **SICOWA Verfahrenstechnik für Baustoffe GmbH & Co. KG**
**Handerweg 17**
**D-5100 Aachen (DE)**

(72) Erfinder: **Koslowski, Thomas, Dr.**
**Buschmühle 1**
**D-5100 Aachen (DE)**

(74) Vertreter: **Sparing Röhl Henseler Patentanwälte**
**European Patent Attorneys**
**Rethelstrasse 123**
**D-4000 Düsseldorf 1 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Mörtelmischung für schnellerhärtende Zementestriche, enthaltend Bindemittel, übliche Zuschläge und Zusätze.

Aus der FR-PS 22 33 295 ist es bekannt, einerseits ein Zement-, Mörtel- oder Betongemisch und andererseits einen Wirkstoff zur Schnellerstarrung in Form eines Pulvers oder einer Suspension aus Calciumaluminat und anorganischem Sulfat herzustellen, wobei die sich durch Vermischen hiervon ergebende Rohmischung sofort zu verarbeiten ist. Der Wirkstoff kann einen Carboxylsäureverzögerer als auch einen Beschleuniger, der etwa auch geringe Mengen an Kalkhydrat aufweisen kann, enthalten. Der Wirkstoff soll möglichst mindestens eine halbe Stunde nicht erstarren, jedoch bei Vermischung mit dem Zement-, Mörtel- oder Betongemisch sehr rasch zu dessen Erstarrung führen, es wird ein Ansteifen in wenigen Minuten, z.B. zwischen 5 und 10 min, angestrebt. Nachteilig ist es, daß getrennt zwei Mischungen hergestellt werden müssen, die anschließend miteinander zu mischen sind, wonach sich nur eine sehr geringe Verarbeitungszeit und eine hohe Temperaturempfindlichkeit ergibt. Die Frühfestigkeit beruht auf Ettringitbildung und erfolgt relativ langsam im Stundenbereich.

Bei Mörteln für Zementestriche, wie sie als Verbundestrich, schwimmender Estrich, Estrich für Fußbodenheizung, im Straßenbau, für Industriefußböden o.dgl. verwendet werden, bestehen bei üblicher Zusammensetzung Probleme hinsichtlich eines zu großen Schwindens, wodurch nur kleine Feldgrößen kleiner 30 $m^2$, mit Feldlängen kleiner 6 mm hergestellt werden können, wobei entsprechende Dehnfugen in Kauf zu nehmen sind. Außerdem sind derartige Zementestriche erst nach drei Tagen begehbar, etwa sieben Tage lang feucht zu halten, und bis zu drei Wochen vor extremen Bedingungen zu schützen. Die Verarbeitbarkeit ist hierbei normalerweise relativ schlecht, da der Verteilungs- und Verdichtungsaufwand relativ groß ist, da die Konsistenz des Estrichs im Bereich K1 (DIN 1045) liegt.

Es sind ferner Zementestriche bekannt, die eine flüssigere Konsistenz aufweisen und damit besser verarbeitbar sind, jedoch besteht hierbei normalerweise ein erhöhter Nachbehandlungsaufwand, außerdem können Sedimentationserscheinungen auftreten. Die Begehbarkeit wird hierdurch nicht günstig beeinflußt.

Aufgabe der Erfindung ist es, eine Mörtelmischung für schnellerhärtende Zementestriche zu schaffen, die es ermöglicht, Estriche herzustellen, die eine schnelle Begeh- und Belastbarkeit zeigen, möglichst große Flächen mit möglichst wenig Dehnfugen herzustellen, Rißfreiheit gewährleistet und neben guter Verarbeitbarkeit bei geringem Wassergehalt auch ein gutes Austrocknungsverhalten zeigt.

Diese Aufgabe wird gelöst durch eine Mörtelmischung für schnellerhärtende Zementestriche, enthaltend Bindemittel, Zuschläge und Zusätze, und mit einem Gehalt an

a. 7 bis 30, insbesondere 7 bis 28 Gew.-Teilen reaktive Calciumsilikate,
b. 1.5 bis 7 Gew.-Teilen reaktive Aluminate, berechnet als CA,
c. 0,3 bis 5 Gew.-Teilen Calciumhydroxid,
d. 0,2 bis 2 Gew.-Teilen Calciumsulfathalbhydrat,
e. 0,4 bis 4 Gew.-Teilen Calciumsulfatanhydrit-II,
f. 0,01 bis 0,5 Gew.-Teilen organischem, die Keimbildung und das Walchstum von Calciumaluminatsulfathydrat hemmendem Abbindeverzögerer,

derart, daß eine Reaktionskette über die folgenden Reaktionsprodukte: Primärettringit, Monophasen (Calciumaluminatsulfatmonosulfat), Sekundärettringit und Calciumhydrosilikat abläuft.

Vorzugsweise werden verwendet
10 bis 25, insbesondere 10 bis 20 Gew.-Teile reaktive Calciumsilikate und/oder
2,5 bis 6 Gew.-Teile reaktive Aluminate, berechnet als CA, und/ oder
0,5 bis 4 Gew.-Teile Calciumhydroxid und/oder
0,5 bis 1,5 Gew.-Teile Calciumsulfathalbhydrat und/oder
0,8 bis 3 Gew.-Teile Calciumsulfatanhydrit-II und/oder
0,05 bis 0,15 Gew.-Teile organischen Abbindeverzögerer.

Mit einer derartigen Mörtelmischung lassen sich Topfzeiten von mehreren Stunden, beispielsweise 2 bis 4 Stunden, einstellen. Die Topfzeit läßt sich durch entsprechende Mengen an Calciumsulfathalbhydrat und organischem Abbindeverzögerer variieren. Als Calciumsulfathalbhydrat eignet sich beispielsweise Stuckgips, als organischer Abbindeverzögerer eignet sich beispielsweise eine Oxycarbonsäure, etwa Wein-, Apfel-, Glukon- oder Zitronensäure sowie deren Salze. Und zwar eignen sich solche organischen Abbindeverzögerer, die eine hohe Löslichkeit in Wasser, eine hohe Lösungsgeschwindigkeit aufweisen sowie schwerlösliche Salze mit Calcium bzw. Aluminium bilden. Insbesondere eignet sich Zitronensäuremonohydrat. Die Säuren bzw. deren Salze können auch in Mischung verwendet werden. Da es sich um eine Fertigmörtelmischung handelt, versteht es sich, daß die organischen Abbindeverzögerer pulverförmig in der Mörtelmischung enthalten sind.

Für die Topfzeit des angemachten Mörtels ist eine Mindestmenge an Calciumsulfathalbhydrat wegen der hohen Lösungsgeschwindigkeit und Löslichkeit hiervon notwendig, jedoch sollte die Menge an Halbhydrat andererseits auch so gering wie möglich gehalten werden. Das Halbhydrat kann auch gegebenenfalls ganz oder teilweise durch Anhydrit-III ersetzt werden, der ebenfalls eine sehr hohe Lösungsgeschwindigkeit und Löslichkeit in Wasser aufweist. Für die Einstellung der Topfzeit ist Anhydrit-II ungeeignet, während das Dihydrat nur geringen Einfluß ausüben kann.

Durch die Schnellerhärtung nach Beendigung der Topfzeit ergibt sich sehr schnell eine hohe Frühfestigkeit infolge einer steilen Erstarrungscharakteristik. Im Frühbereich finden vorrangig die Reaktionen der reaktiven Aluminate mit Calciumhydroxid und weiter mit Anhydrit-II statt. Die sich hierbei bildenden Reaktionsprodukte sind zunächst Monophasen (Calciumaluminatmonosulfat) und später Ettringit, der nadelförmig und langprismatisch ausgebildet ist. Zusätzlich verstärkt sich der Einfluß der sich verspätet bildenden Calciumhydrosilikate.

Durch diese Vorgänge werden Praktisch in zwei ineinander übergehenden Stufen die Formänderungen im Frühbereich gesteuert. Durch Einstellung des Verhältnisses der reaktiven Aluminate zu den reaktiven Calciumsilikaten, zum Calciumhydroxid und zum Anhydrit-II lassen sich diese Formänderungen im Frühbereich steuern, und zwar vorzugsweise derart, daß zunächst durch Ausbildung der plättchenförmigen Monophasen eine Volumenexpansion (das Druckspannungen erzeugt) in einer ersten Stufe stattfindet, das dem Schwinden (das Zugspannungen erzeugt) während dieses Zeitraumes entgegenwirkt, während anschließend durch die Ettringitbildung eine Volumenexpansion in einer weiteren Stufe stattfindet, das dem normalerweise auftretenden Schwinden während dieses Zeitraumes entgegenwirkt. Es läßt sich auch eine absolute Volumenvergrößerung des Mörtels durch entsprechende Wahl der Gewichtsteile einstellen. Die Endfestigkeit des erhaltenen Zementestrichs ergibt sich hauptsächlich durch die Reaktion der reaktiven Calciumsilikate mit Wasser, hierbei bilden sich CSH-Phasen. Durch Veränderung des Verhältnisses der reaktiven Calciumsilikate zu den reaktiven Aluminaten werden auch die Endfestigkeiten beeinflußt und können hierdurch entsprechend eingestellt werden.

Der Anhydrit-II, der mit einer Blaine-Oberfläche von etwa 1000 bis 10000 $cm^2/g$, insbesondere 3000 bis 8000 $cm^2/g$ oder von Zementfeinheit bis Kalkhydratfeinheit eingesetzt werden kann, spielt bei der Steuerung der Schnellerstarrung infolge seiner Reaktionsträgheit nur eine untergeordnete Rolle. Während das Halbhydrat bei der Bildung von Primärettringit und der Monophasen verbraucht wird, bleibt der Anhydrit-II größtenteils erhalten und kann nun, nachdem die Aluminate ausreagiert sind, mit den vergleichsweise Al-reichen und $SO_4$-armen Monophasen und nicht reagiertem Restaluminat zu dem $SO_4$-reicheren Sekundärettringit, der durch seinen langstrahligen, faserigen Habitus ein sehr günstiges Verfilzen und Verwachsen der Restmonophasen und der übrigen Restkomponenten bewirkt, gemäß folgender Reaktion reagieren

$$C_3ACs{\cdot}H_{12} + 2Cs + 20H \rightarrow C_3A3Cs{\cdot}H_{32}$$

Die Sekundärettringitbildung ist mit einem weiteren Festigkeitsanstieg verbunden.

Sowohl Zitronensäure (oder die ansonsten verwendete organische Verbindung) als auch Halbhydrat und Anhydrit stellen Abbindeverzögerer für reaktives Aluminat - etwa vom Tonerdezement - dar (ggf. kann Sulfat aber auch die Reaktion von reinem Tonerdezement beschleunigen), wirken jedoch alleine nicht in kalkhydratreichen Systemen, da sie dann das reaktive Aluminat nicht genügend gegen das Kalkhydrat abschirmen und dadurch auch keine Abbindeverzögerung herbeiführen können. Überraschenderweise hat es sich jedoch gezeigt, daß durch die Kombination beider Abbindeverzögerer reaktives Aluminat auch in kalkhydratreicher Umgebung, d.h. in solcher Umgebung, in der vorzugsweise wenigstens etwa 30% des zur stöchiometrischen Reaktion mit dem Aluminat erforderlichen Kalkhydrats (als solches zugegeben oder durch Löschen von Branntkalk im angemachten Mörtel in der Anfangsphase fortlaufend entstehend) vorhanden ist, in gewünschter Weise verzögert werden kann.

Die reaktiven Calciumsilikate, die vorzugsweise in einer Menge von 10 bis 20 Gewichtsteilen enthalten sind, umfassen $C_3S$, $C_2S$ und $C_2AS$. Als reaktive Aluminate, die vorzugsweise in einer Menge von 2,5 bis 6 Gewichtsteilen vorhanden sind, eignen sich $C_3A$, CA, $C_{12}A_7$ und $C_4AF$ (letzteres ist jedoch weniger reaktiv als die vorstehenden). Als reaktive Aluminate können CA bzw. $C_{12}A_7$ alleine oder in Kombination und mit den übrigen aufgeführten Aluminaten verwendet werden, jedoch ist eine CA- oder $C_{12}A_7$-Komponente erforderlich, da nur diese mit Kalkhydrat zu Monophasen und Ettringit reagieren können. $C_{12}A_7$ kann fluorstabilisiert sein. Stattdessen oder zusammen mit den aufgeführten reaktiven Aluminaten kann auch schwer lösliches Aluminiumsulfat verwendet werden.

Abhängig von der erforderlichen Verzögerungszeit, der Erstarrungscharakteristik und der anzustrebenden Volumenexpansion im Frühbereich kann das Verhältnis von reaktiven Aluminaten, berechnet als CA, und dem Gesamtsulfatgehalt zwischen etwa 5:1 und 1:1, vorzugsweise zwischen 3:1 und 2:1, liegen. Außerdem ist ein gewisser Sulfatgehalt zweckmäßig, um Monophasen und Ettringit zu stabilisieren und keine unerwünschten Umwandlungsprodukte wie Hydrogranat und Gehlenithydrat zu erhalten. Insgesamt bleibt man aber bei den vorstehend genannten Verhältnissen bei einem sehr niedrigen Sulfatgehalt, der eine Langzeitraumbeständigkeit sicherstellt.

In Kombination mit den aufgeführten reaktiven Calciumsilikaten können auch latenthydraulische Stoffe, beispielsweise Hochofenschlacke und puzzolanisch-hydraulische Stoffe verwendet werden.

Calciumhydroxid wird vorzugsweise in einer Menge von 0,5 bis 4 Gewichtsteilen verwendet und kann gegebenenfalls ganz oder teilweise als Branntkalk eingebracht werden. Calciumhydroxid kann auch teilweise ersetzt werden durch ein lösliches Calciumcarbonat und/oder durch ein lösliches wasserhaltiges Magnesiumcarbonat.

Calciumsulfathalbhydrat wird vorzugsweise in einer Menge von 0,5 bis 1,5 Gewichtsteilen verwendet und beispielsweise als Stuckgips oder als Autoklavgips eingebracht.

Calciumsulfatanhydrit-II wird vorzugsweise in einer Menge von 0,8 bis 3,0 Gewichtsteilen verwendet, und zwar in Form von fein aufgemahlenem Naturanhydrit oder als Chemieanhydrit, und zwar in schwer löslicher bis unlöslicher Form. Falls lösliche Anteile im Anhydrit vorhanden sind, ist dies bei der Dosierung des Calciumsulfathalbhydrates zu berücksichtigen.

Das Verhältnis zwischen reaktiven Aluminaten und Calciumhydroxid ist vorzugsweise kleiner als 3, um die gewünschte Schnellerstarrungscharakteristik über die Monophasen zu erhalten. Insbesondere bei Verwendung der Mörtelmischung bei sehr hohen Außentemperaturen kann auch ein Wert für dieses Verhältnis größer als 3, vorzugsweise kleiner gleich 5, zweckmäßig sein.

Das Calciumsulfatanhydrit und/oder -halbhydrat kann partiell durch Calciumsulfatdihydrat ersetzt werden, um den Übergang zwischen den Formänderungsstufen zu glätten. Letzeres kann aber auch durch die Wahl des Anhydrits-II bewirkt werden.

Die Mörtelmischung muß, um zusätzlich zu einer geringen Langzeitschwindung zu führen, einen Mindestgehalt an Calciumhydroxid abspaltenden Verbindungen, beispielsweise $C_3S$, enthalten, damit wenigstens bis zum Erreichen der Endfestigkeit ein hochalkalisches Milieu aufrechterhalten bleibt. Dies ist insbesondere bei luftporosierten Mörteln zweckmäßig, um den Ettringit vor Carbonatisierung in den oberen Schichten zu schützen.

Eine Erhöhung der Menge an reaktiven Calciumsilikaten erhöht die Endfestigkeit. Eine Erhöhung der Menge an reaktiven Aluminaten erhöht die Früh- und Endfestigkeit. Eine Erhöhung des Calciumhydroxidgehalts erhöht im Zusammenhang mit einer Erhöhung der reaktiven Aluminate die erste Stufe der Frühfestigkeit und ergibt eine steilere Erstarrungscharakteristik. Eine Erhöhung des Calciumsulfathalbhydratgehaltes führt zu einer Verlängerung der Topfzeit und einer Abflachung der Erstarrungscharakteristik. Eine Erhöhung des Calciumsulfatanhydrit-II-Gehaltes im Zusammenhang mit einer Erhöhung der reaktiven Aluminate führt zu einer Erhöhung der Schwindkompensation im Frühbereich und damit der Frühfestigkeit. Eine Vergrößerung der Menge an eingesetztem organischem Verzögerer führt zu einer Verlängerung der Topfzeit und einer Abflachung der Erstarrungscharakteristik.

Zur Erzielung der angestrebten Zusammensetzung kann man eine Mischung aus Portland- und Tonerdezement verwenden, wobei die zuzusetzenden Mengen an Halbhydrat und Anhydrit-II sowie an Calciumhydroxid auf den Gehalt und die Art des Sulfats bzw. den Freikalkgehalt des Portland-Zements abzustimmen ist. Anstelle des Portlandzements läßt sich auch vorteilhaft ein Portlandzementklinker - auf Zementfeinheit gemahlen einsetzen, wobei das Sulfat getrennt zu dosieren ist.

Als Zuschläge für die Mörtelmischung kommen beispielsweise Quarzsand, dessen Sieblinie in Abhängigkeit von der Schichtdicke des Estrichs zu wählen ist, Kalksteinsand, Flugasche oder dergleichen infrage, die das Stützgerüst des Estrichs bilden. Die Zuschläge sind in üblicher Weise auf eine stetige Sieblinie abzustimmen. Auch können mineralische oder organische Fasern beigemengt werden. Im Estrich kann ein Armierungsgewebe eingebettet sein.

Als Zusatzmittel und -stoffe kommen beispielsweise Beschleuniger, insbesondere Alkalisalze (Lithiumverbindungen etwa $Li_2CO_3$, Li(OH), $Na_2CO_3$, Na(OH), $K_2CO_3$, K(OH) oder Wasserglas, etwa K- bzw. Na-Wasserglas, in trockener kristalliner Form, wobei ein Alkaligehalt berechnet als $Na_20$, unter 0,6 Gew.-Teilen bevorzugt wird), Dichtmittel, Verflüssiger, Haftverbesserer, Frostschutzmittel, Stabilisatoren, Hydrophobierungsmittel, Mittel zur Verbesserung des Wasserrückhaltevermögens ebenso wie Luftporenbildner, Pigmente oder dergleichen infrage. Der Anteil des Bindemittels an der Mörtelmischung liegt im allgemeinen im Bereich zwischen 20 und 30 Gewichtsteilen.

Die Dosierung des Anmachwassers und gegebenenfalls Verflüssigers bestimmt sich durch die Anforderungen an die Verarbeitbarkeit und aus dem Anwendungszweck, die Konsistenzen größer K3 (DIN 1045) bis selbstnivellierend bzw. bei üblichen Konsistenzen hohe Frühfestigkeiten erforderlich machen. Durch die Schnellerstarrung gegebenenfalls unterstützt durch Stabilisatoren, können Sedimentationserscheinungen (bei Konsistenzen größer K3) unterdrückt werden. Selbst für Konsistenzen größer K3 benötigt man einen geringen Wasser/Bindemittel-Wert von etwa 0,3 bis 0,5. Im Frühbereich wird Wasser durch Monophasen- und Ettringitbildung gebunden, wodurch sich eine schnelle und relativ gleichmäßige Austrocknung ergibt.

Bezüglich der Definition der Calciumsulfatphasen, etwa Anhydrit-II, wird beispielsweise auf Winnacker, Küchler, Chemische Technologie, München 1983, Band III, S. 263 ff. verwiesen. Portland- und Tonerdezementzusammensetzungen sind beispielsweise im Zement-Taschenbuch, Wiesbaden 1984, S. 49 ff. herausgegeben vom Verein Deutscher Zementwerke, aufgeführt.

**Patentansprüche**

1. Mörtelmischung für schnellerhärtende Zementestriche, enthaltend Bindemittel, übliche Zuschläge und Zusätze, gekennzeichnet durch einen Gehalt an
   a. 7 bis 30 Gew.-Teilen reaktive Calciumsilikate,
   b. 1,5 bis 7 Gew.-Teilen reaktive Aluminate, berechnet als CA,
   c. 0,3 bis 5 Gew.-Teilen Calciumhydroxid,
   d. 0,2 bis 2 Gew.-Teilen Calciumsulfathalbhydrat und/oder -anhydrit-III,
   e. 0,4 bis 4 Gew.-Teilen Calciumsulfatanhydrit-II,

f. 0,01 bis 0,5 Gew.-Teilen organischem, die Keimbildung und das Wachstum von Calciumaluminatsulfathydrat hemmendem Abbindeverzögerer,

derart, daß eine Reaktionskette über die folgenden Reaktionsprodukte: Primärettringit, Monophasen (Calciumaluminatmonosulfat), Sekundärettringit und Calciumhydrosilikat abläuft.

2. Mörtelmischung nach Anspruch 1, gekennzeichnet durch 10 bis 25, insbesondere 10 bis 20 Gew.-Teile reaktive Calciumsilikate und/oder

2,5 bis 6 Gew.-Teile reaktive Aluminate, berechnet als CA, und/oder

0,5 bis 4 Gew.-Teile Calciumhydroxid und/oder

0,5 bis 1,5 Gew.-Teile Calciumsulfathalbhydrat und/oder -anhydrit-III, und/oder

0,8 bis 3 Gew.-Teile Calciumsulfatanhydrit-II und/oder

0,05 bis 0,15 Gew.-Teile organischen Abbindeverzögerer.

3. Mörtelmischung nach Anspruch 1 oder 2, dadurch abgewandelt, daß das Calciumsulfatanhydrit und/oder -halbhydrat partiell durch Calciumsulfatdihydrat ersetzt ist.

4. Mörtelmischung nach einem der Ansprüche 1 bis 3, dadurch abgewandelt, daß das Calciumhydroxid ganz oder teilweise durch Calciumoxid ersetzt ist.

5. Mörtelmischung nach einem der Ansprüche 1 bis 4, dadurch angewandelt, daß das Calciumhydroxid teilweise ersetzt ist durch ein lösliches Calciumcarbonat.

6 Mörtelmischung nach einem der Ansprüche 1 bis 5 dadurch abgewandelt, daß das Calciumhydroxid teilweise ersetzt ist durch lösliches, wasserhaltiges Magnesiumcarbonat.

7. Mörtelmischung nach einem der Ansprüche 1 bis 6, dadurch gekennzeichnet, daß zur Erzielung einer geringen Langzeitgeschwindigkeit Calciumhydroxid wenigstens bis zum Erreichen der Endfestigkeit abspaltende Verbindungen enthalten sind.

8. Mörtelmischung nach einem der Ansprüche 1 bis 7, dadurch gekennzeichnet, daß sie als organischen Abbindeverzögerer Oxycarbonsäure(n), insbesondere Zitronensäure, oder deren Salz(e) enthält.

9. Mörtelmischung nach einem der Ansprüche 1 bis 8, gekennzeichet durch einen Alkaligehalt, berechnet als $Na_2O$, unter 0,6 Gew.-Teilen.

10. Mörtelmischung nach einem der Ansprüche 1 bis 9, dadurch gekennzeichnet, daß ein Luftporenbildner in einer solchen Menge enthalten ist, daß sich ein Luftporengehalt von etwa 3 bis 15% im Estrich ergibt.

**Revendications**

1. Mélange de mortier pour chapes en ciment à durcissement rapide, contenant un liant, des granulats et des adjuvants, caractérisé en ce qu'il contient:

a. 7 à 30, en particulier 7 à 28 parties en poids de silicates de calcium réactifs,

b. 1,5 à 7 parties en poids d'aluminates réactifs, calculés en CA,

c. 0,3 à 5 parties en poids d'hydroxyde de calcium,

d. 0,2 à 2 parties en poids de sulfate de calcium semi-hydraté et/ou de type anhydrite-III,

e. 0,4 à 4 parties en poids de sulfate de calcium de type anhydrite-II,

f. 0,01 à 0,5 partie en poids d'un retardateur de prise organique, inhibant la germination et la croissance du sulfoaluminate de calcium hydraté,

de façon qu'une chaîne réactionnelle ait lieu, avec les produits suivants: ettringite primaire, monophases (monosulfoaluminate de calcium), ettringite secondaire et hydrosilicate de calcium.

2. Mélange de mortier selon la revendication 1, caractérisé en ce qu'il contient:

10 à 25, en particulier 10 à 20 parties en poids de silicates de calcium réactifs, et/ou

2,5 à 6 parties en poids d'aluminates réactifs, calculés en CA, et/ou

0,5 à 4 parties en poids d'hydroxyde de calcium, et/ou

0,5 à 1,5 partie en poids de sulfate de calcium semi-hydraté et/ou de type anhydrite-III, et/ou

0,8 à 3 parties en poids de sulfate de calcium de type anhydrite-II, et/ou

0,05 à 0,15 partie en poids d'un retardateur de prise organique.

3. Mélange de mortier selon la revendication 1 ou 2, caractérisé en ce que le sulfate de calcium de type anhydrite et/ou semi-hydraté est partiellement remplacé par du sulfate de calcium dihydraté.

4. Mélange de mortier selon l'une des revendications 1 à 3, caractérisé en ce que l'hydroxyde de calcium est remplacé en totalité ou en partie par de l'oxyde de calcium.

5. Mélange de mortier selon l'une des revendications 1 à 4, caractérisé en ce que l'hydroxyde de calcium est partiellement remplacé par un carbonate de calcium soluble.

6. Mélange de mortier selon l'une des revendications 1 à 5, caractérisé en ce que l'hydroxyde de calcium est partiellement remplacé par du carbonate de magnésium soluble hydraté.

7. Mélange de mortier selon l'une des revendications 1 à 6, caractérisé en ce que, pour obtenir un faible retrait à long terme, il contient des composés qui éliminent de l'hydroxyde de calcium au moins jusqu'à ce que l'on atteigne la résistance finale.

8. Mélange de mortier selon l'une des revendications 1 à 7, caractérisé en ce qu'il contient comme accélérateur de prise organique un ou plusieurs acides oxycarboxyliques, en particulier de l'acide citrique, et un ou plusieurs de leur(s) sel(s).

9. Mélange de mortier selon l'une des revendications 1 à 8, caractérisé en ce qu'il a une teneur en métaux alcalins, calculée en $Na_20$, inférieure à 0,6 partie en poids.

10. Mélange de mortier selon l'une des revendications 1 à 9, caractérisé en ce qu'il contient un entraîner d'air en une quantité donnant dans la chape une teneur en pores d'environ 3 à 15%.

**Claims**

1. A mortar mixture for quick-setting cement screed material, containing binders, conventional aggregates and additives and characterised by a content of

a. 7 to 30 parts by weight of reactive calcium silicates,
b. 1.5 to 7 parts by weight of reactive aluminates, calculated as CA,
c. 0.3 to 5 parts by weight of calcium hydroxide,
d. 0.2 to 2 parts by weight of calcium sulphate hemihydrate and/or anhydrite-III,
e. 0.4 to 4 parts by weight of calcium sulphate anhydrite-II and
f. 0.01 to 0.5 parts by weight of organic setting retarder which inhibits nucleation and the growth of hydrated calcium aluminate sulphate,

such that a reaction chain occurs via the following products: primary ettringite, monophases (calcium aluminate monosulphate), secondary ettringite and calcium hydrosilicate.

2. A mortar mixture according to claim 1, characterised by 10 to 25, more particularly 10 to 20 parts by weight of reactive calcium silicates and/or
2.5 to 6 parts by weight of reactive aluminates calculated as CA, and/or
0.5 to 4 parts by weight of calcium hydroxide and/or
0.5 to 1.5 parts by weight of calcium sulphate hemihydrate and/or anhydrite III and/or
0.8 to 3 parts by weight of calcium sulphate anhydrite II and/or
0.05 to 0.15 parts by weight of organic setting retarder.

3. A mortar mixture according to claim 1 or 2, characterised in that the calcium sulphate anhydrite and/or hemihydrate is partially replaced by calcium sulphate dihydrate.

4. A mortar mixture according to any of claims 1 to 3, characterised in that the calcium hydroxide is partly or completely replaced by calcium oxide.

5. A mortar mixture according to any of claims 1 to 4, characterised in that the calcium hydroxide is partly replaced by a soluble calcium carbonate.

6. A mortar mixture according to any of claims 1 to 5, characterised in that the calcium hydroxide is partly replaced by soluble water-containing magnesium carbonate.

7. A mortar mixture according to any of claims 1 to 6, characterised in that in order to obtain a low long-term speed, it contains compounds which split off calcium hydroxide at least until the final strength is reached.

8. A mortar mixture according to any of claims 1 to 7, characterised in that it contains one or more hydroxycarboxylic acids, more particularly citric acid, or salt(s) thereof as organic setting retarder.

9. A mortar mixture according to any of claims 1 to 8, characterised by an alkali content, calculated as $Na_20$, of below 0.6 parts by weight.

10. A mortar mixture according to any of claims 1 to 9, characterised in that it contains an air-entraining agent in a quantity such that the content of air voids in the screed is from 3 to 15%.